# EUROPÄISCHE PATENTSCHRIFT

(11) **EP 2 150 374 B1**
(45) Veröffentlichungstag und Bekanntmachung des Hinweises auf die Patenterteilung: **24.08.2011**
(21) Anmeldenummer: 08759464.4
(22) Anmeldetag: 08.05.2008
(51) Int. Cl.: B23Q 1/01, F16C 29/00

(54) **SCHLITTENSYSTEM FÜR WERKZEUGMASCHINEN**
SLED SYSTEM FOR MACHINE TOOLS
SYSTÈME À COULISSEAU POUR MACHINES-OUTILS

(30) Priorität: 24.05.2007 DE 102007025762
(43) Veröffentlichungstag der Anmeldung: 10.02.2010
(73) Patentinhaber: Index-Werke GmbH & Co. KG Hahn & Tessky, 73730 Esslingen (DE)
(72) Erfinder: GROSSMANN, Walter, 73666 Baltmannsweiler (DE); SCHLEICH, Günter, 73269 Hochdorf (DE)
(74) Vertreter: Hoeger, Stellrecht & Partner Patentanwälte
(86) Internationale Anmeldenummer: PCT/EP2008/055680
(87) Internationale Veröffentlichungsnummer: WO 2008/141944

(56) Entgegenhaltungen:
- EP-A- 1 348 514
- EP-A- 1 517 055
- DE-A1- 4 206 754

## Beschreibung

Die Erfindung betrifft ein Schlittensystem für Werkzeugmaschinen, umfassend einen Grundkörper, mindestens eine am Grundkörper gehaltene Führungsschiene, die sich in einer Längsrichtung erstreckt und die einen Führungsbereich und einen Fußbereich aufweist, und einen mit mindestens einem Führungswagen an der Führungsschiene geführten Schlitten.

Derartige Schlittensysteme sind aus dem Stand der Technik bekannt.

Bei diesen wird üblicherweise zur Fixierung der Führungsschiene am Grundkörper sowohl der Führungsbereich als auch der Fußbereich von Schrauben durchsetzt, die die Führungsschiene gegen den Grundkörper verspannen.

Ein alternativen Aufbau ist auch aus dem Patentdokument DE-A-42 06 754 bekannt.

Der Erfindung liegt daher die Aufgabe zugrunde, ein Schlittensystem der gattungsgemäßen Art derart zu verbessern, dass dieses einerseits eine hohe Führungsqualität in Längsrichtung der Führungsschiene aufweist, und andererseits einfach zu montieren und raumsparend ausgebildet ist.

Diese Aufgabe wird bei einem Schlittensystem der Eingangs genannten Art erfindungsgemäß durch die Merkmale von Anspruch 1 gelöst.

Der Vorteil der erfindungsgemäßen Lösung ist darin zu sehen, dass diese eine vereinfachte Montage bei guter Präzision der Ausrichtung der Führungsschiene relativ zum Grundkörper und der Geradheit der Führungsschiene selbst gewährleistet.

Darüber hinaus hat diese Lösung den Vorteil, dass der Führungsbereich von den Schrauben nicht tangiert ist und dadurch nicht das Problem besteht, dass sich im Bereich der Führungsflächen Späne in Ausnehmungen für die Schrauben einlagern oder die Ausnehmungen für die Schrauben verschlossen werden müssen.

Eine besonders vorteilhafte Lösung sieht vor, dass jede Ausrichtungsfläche und die zugeordnete Fläche des Einsatzkörpers eine Flächenpaarung bilden und dass mindestens eine Fläche jeder Flächenpaarung als ebene Fläche ausgebildet ist, so dass dadurch eine besonders gute Ausrichtung der Führungsschiene möglich ist.

Optimal ist die Ausrichtung der Führungsschiene durch die Ausrichtflächen, wenn beide Flächen einer Flächenpaarung als ebene Flächen ausgebildet sind.

Um außerdem eine gute Positionierung des Einsatzkörpers in der Aufnahme zu erreichen, ist vorzugsweise vorgesehen, dass die Ausrichtflächen in einem Winkel in der Größenordnung von 90° zueinander verlaufen.

Ein derartiger Winkel in der Größenordnung von 90° bedeutet, dass die Ausrichtflächen quer zur Längsrichtung der Führungsschiene einen Winkel zwischen ungefähr 80° und ungefähr 100° miteinander einschließen können.

Hinsichtlich der Ausbildung der Flächenpaarungen wurden bislang keine näheren Angaben gemacht.

Um eine möglichst hohe Präzision zu erreichen, ist vorgesehen, dass die Flächenpaarungen jeweils durch mit hoher maßlicher und geometrischer Qualität feinbearbeitete Flächen gebildet sind, wobei dies bei Stahlkörpern geschliffene Flächen sind und bei Gussteilen feingefräste Flächen.

Hinsichtlich der Ausbildung der Führungsschiene selbst wurden bislang keine näheren Angaben gemacht.

So sieht eine vorteilhafte Lösung vor, dass der Führungsbereich symmetrisch zu einer Längsmittelebene der Führungsschiene ausgebildet ist.

Ferner ist vorzugsweise auch vorgesehen, dass der Fußbereich symmetrisch zu einer Längsmittelebene der Führungsschiene ausgebildet ist.

Ferner ist vorzugsweise zur Erreichung einer möglichst stabilen Führungsschiene vorgesehen, dass der Fußbereich und der Führungsbereich der Führungsschiene Teil einer einstückigen, sich in der Längsrichtung erstreckenden Profilschiene sind, so dass durch ausreichend präzise Ausrichtung des Fußbereichs zwangsläufig der Führungsbereich eine Ausrichtung mit derselben Qualität erfährt.

Ferner ist vorzugsweise vorgesehen, dass die Profilschiene in der Längsrichtung eine im Wesentlichen konstante Querschnittsform aufweist.

Um die Führungsschiene möglichst parallel zu den Ausrichtflächen auszurichten und auch die Geradheit der Führungsschiene möglichst optimal zu halten, ist vorzugsweise vorgesehen, dass alle Schrauben ständig im Wesentlichen mit gleich großen Vorspannkräften auf den Einsatzkörper und die Aufnahme einwirken, so dass der Grundkörper zur Ausrichtung und Geradheit der Führungsschiene beiträgt.

Hinsichtlich der Anordnung der Aufnahme oder des Einsatzkörpers an dem Grundkörper bzw. dem Fußbereich wurden bislang keine näheren Angaben gemacht.

Eine konstruktiv besonders einfache und zweckmäßige Lösung sieht vor, dass der Fußbereich der Führungsschiene als Einsatzkörper ausgebildet ist und der Grundkörper die Aufnahme aufweist, in welche dann der Einsatzkörper einsetzbar ist.

Hinsichtlich der Anordnung der an den Ausrichtflächen anlegbaren Flächen des Fußbereichs wurden bislang keine näheren Angaben gemacht.

So sieht eine besonders günstige Lösung vor, dass eine erste der an den Ausrichtflächen anlegbaren Flächen auf einer dem Führungsbereich gegenüberliegenden Seite des Fußbereichs verläuft.

Ferner sieht eine weitere vorteilhafte Lösung vor, dass eine zweite der an den Ausrichtflächen anlegbaren Flächen an dem Fußbereich so angeordnet ist, dass sie seitlich der dem Führungsbereich gegenüberliegenden Fläche verläuft.

Vorzugsweise verläuft eine der an den Ausrichtflächen anlegbaren Flächen des Fußbereichs quer, insbesondere ungefähr senkrecht, zur Längsmittelebene der Führungsschiene.

Ferner verläuft insbesondere eine der an den Ausrichtflächen anlegbare Fläche des Fußbereichs ungefähr parallel zur Längsmittelebene der Führungsschiene.

Ferner ist es besonders günstig, wenn die Schraubenachsen quer zur Längsmittelebene der Führungsschiene verlaufen, um somit eine vorteilhafte Ausrichtung der Führungsschiene relativ zu den Schrauben zu erreichen, die einerseits eine Montage der Führungsschiene erleichtert und andererseits die Möglichkeit eröffnet, die Schrauben im Fall von Kollisionen in der Maschine als Sollbruchstelle vorzusehen, so dass die Führungsschiene im Kollisionsfall quer zur Längsmittelebene ausweichen kann, wenn eine oder mehrere Schrauben gebrochen sind. Derartige gebrochene Schrauben lassen sich leicht, insbesondere ohne Demontage des Führungswagens und/oder des Schlittens wieder ersetzen, so dass sich dadurch die ursprüngliche Ausrichtung und Geradheit der Führungsschiene wieder herstellen lässt.

Eine konstruktiv besonders günstige Lösung sieht vor, dass die Schraubenachsen der Schrauben in einer Ebene liegen, so dass sich im Wesentlichen alle Schrauben in derselben Ebene erstrecken und dabei in derselben Richtung auf die Führungsschiene wirken.

Eine besonders zweckmäßige Lösung sieht vor, dass die Schraubenköpfe der Schrauben in dem Fußbereich im Wesentlichen versenkt angeordnet sind.

Hinsichtlich der Ausbildung der Führungsflächen wurden im Zusammenhang mit der bisherigen Erläuterung der einzelnen Ausführungsbeispiele keine näheren Angaben gemacht.

So sieht ein besonders zweckmäßiges Ausführungsbeispiel vor, dass die Führungsflächen des Führungsbereichs als einfach zusammenhängende Flächen ausgebildet sind, das heißt, keine Durchbrüche oder Ausnehmungen aufweisen, die bei der Bewegung der Führungswagen in Längsrichtung der Führungsschiene zu Ablagerungen von Spänen und dadurch bedingten späteren Problemen, beispielsweise bei Abstreifen der Führungswagen führen können.

Besonders vorteilhaft ist es dabei im Rahmen der erfindungsgemäßen Lösung, wenn die Führungsflächen quer zur Längsrichtung der Führungsschiene über die gesamte Länge im Wesentlichen dieselbe Breite aufweisen und somit die Breite derselben nicht variiert.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine schematische perspektivische Darstellung eines Aus- führungsbeispiels eines erfindungsgemäßen Schlitten- systems;
- Fig. 2: eine perspektivische Darstellung von Führungsschiene und Führungswagen des erfindungsgemäßen Systems;
- Fig. 3: eine Seitenansicht in Richtung des Pfeils A in Fig. 1 und
- Fig. 4: einen Schnitt längs Linie 4-4 in Fig. 3.

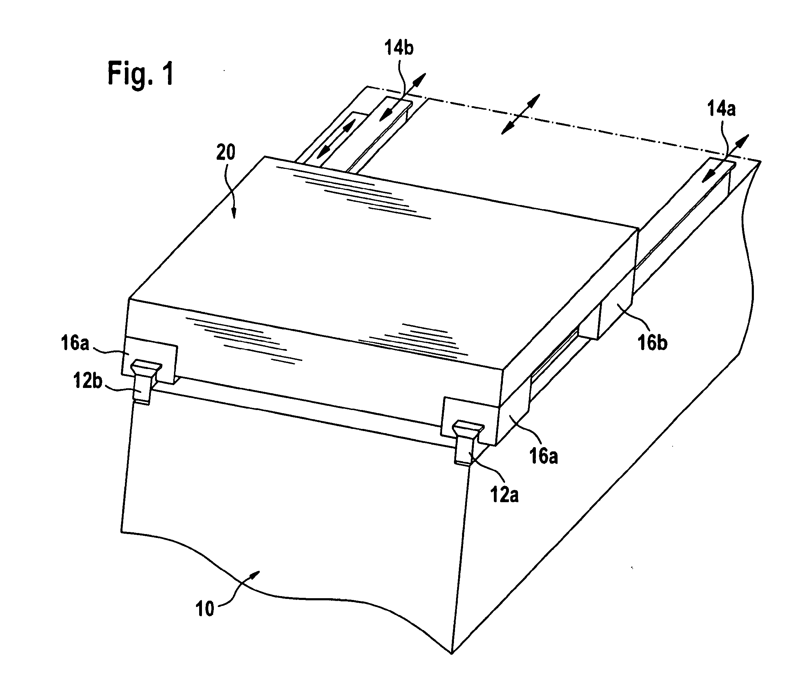

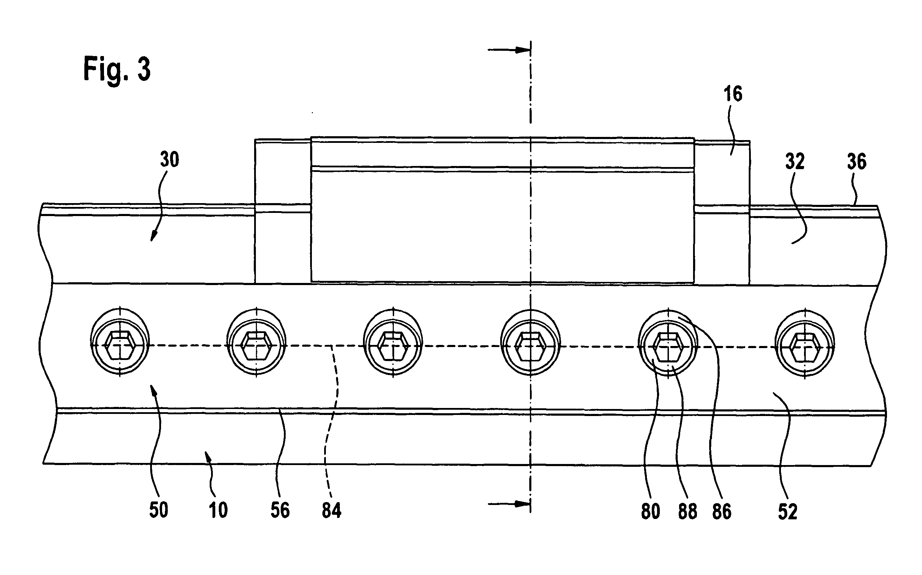

Ein Ausführungsbeispiel eines erfindungsgemäßen Schlittensystems, dargestellt in Fig. 1 bis 4 umfasst einen als Ganzes mit 10 bezeichneten Grundkörper, an welchem zwei Führungsschienen 12a und 12b angeordnet sind, die sich mit ihren Längsrichtungen 14a, 14b parallel zueinander erstrecken, wobei an jeder der Führungsschienen 12 beispielsweise zwei Führungswagen 16a, 16b angeordnet und in Richtung der Längsrichtung 14 geführt sind, wobei die Führungswagen 16a, b in der Längsrichtung 14 gesehen, beiderseits mit Abstreifern 18 zur Entfernung von Spänen von den Führungsschienen 12 versehen ist.

Die Führungswagen 16 tragen dabei einen als Ganzes mit 20 bezeichneten Schlitten, welcher mittels der Führungswagen 16 in der Längsrichtung 14 der Führungsschienen 12 relativ zum Grundkörper 10 bewegbar ist.

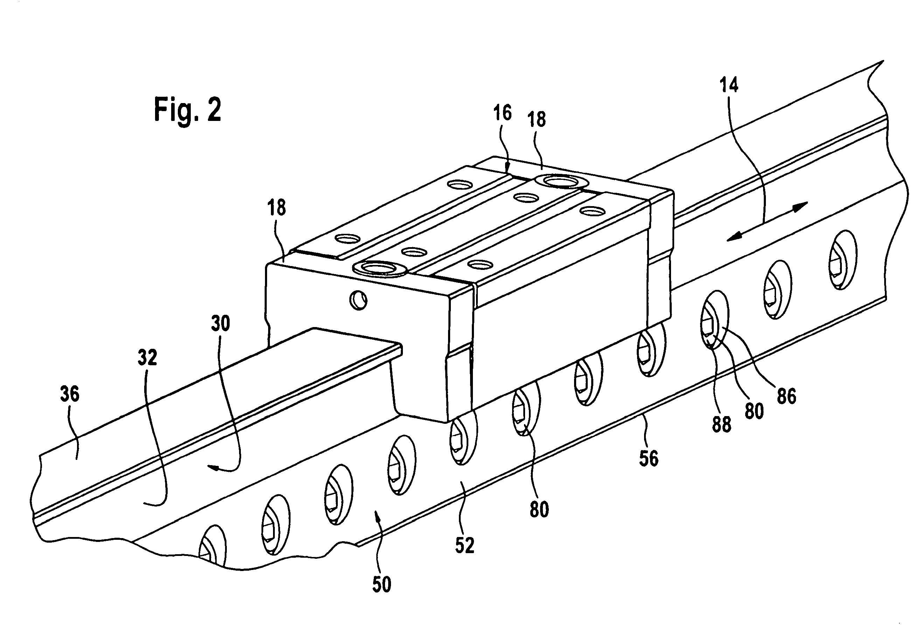

Jede der Führungsschienen 12 umfasst, wie in den Fig. 2 bis 4 vorzugsweise dargestellt, einen Führungsbereich 30, welcher im in den Figuren dargestellten Fall einer Gleitführung mit zwei Seitenführungsflächen 32 und 34 versehen ist, zwischen denen der Führungsbereich 30 liegt und mit einer Querführungsfläche 36, welche quer zu den Seitenführungsflächen 32 und 34 ausgerichtet ist und vorzugsweise auf einer einem Fußbereich 50 der Führungsschiene 12 gegenüberliegenden Seite angeordnet ist, so dass der Führungsbereich 30 zwischen der Querführungsfläche 36 und dem Fußbereich 50 liegt.

Ferner ist der Führungsbereich 30 zwischen der Querführungsfläche 36 und den Seitenführungsflächen 32 und 34 mit einem über die Seitenführungsflächen 32, 34 jeweils überstehenden verbreiterten Bereich 38 versehen, so dass sich auf einer Querführungsfläche 36 gegenüberliegenden Seite des verbreiterten Bereichs 38 Hinterschneidungen 42, 44 bilden, die zu einer sicheren Führung des jeweiligen Führungswagens 16 am Führungsbereich 30 durch Formschluss beitragen.

Vorzugsweise ist dabei der Führungswagen 16 durch die beiden Seitenführungsflächen 32 und 34 sowie die Querführungsfläche 36, die sich parallel zur Längsrichtung 14 erstrecken, in der Längsrichtung 14 der jeweiligen Führungsschiene 12 exakt geführt, wobei die Führung längs der Seitenführungsflächen 32, 34 und der Querführungsfläche 36, die sich alle exakt parallel zur Längsrichtung 14 erstrecken, entweder durch Gleitflächen oder durch Wälzkörper erfolgen kann.

Alternativ zum Fall einer Gleitführung kann der Führungswagen 16 an dem Führungsbereich 30 durch Wälzführungen geführt sein, wobei in diesem Fall Wälzkörper im Führungswagen umlaufend aufgenommen sind und der Führungsbereich 30 mit mehreren Bahnen versehen ist, auf welchen sich die Wälzkörper abwälzen können.

Dabei erfolgt die Anordnung der Bahnen am Führungsbereich 30 und die umlaufende Aufnahme der Wälzkörper im Führungswagen 16 entsprechend bekannten Lösungen.

Vorzugsweise ist dabei der Führungsbereich 30 im Wesentlichen symmetrisch zu einer Längsmittelebene 46 ausgebildet, die parallel zur Längsrichtung 14 verläuft und im Wesentlichen mittig zwischen den Seitenführungsflächen 32, 34 liegt sowie die Querführungsfläche 36 im Wesentlichen mittig schneidet, vorzugsweise im Wesentlichen senkrecht zu dieser verläuft.

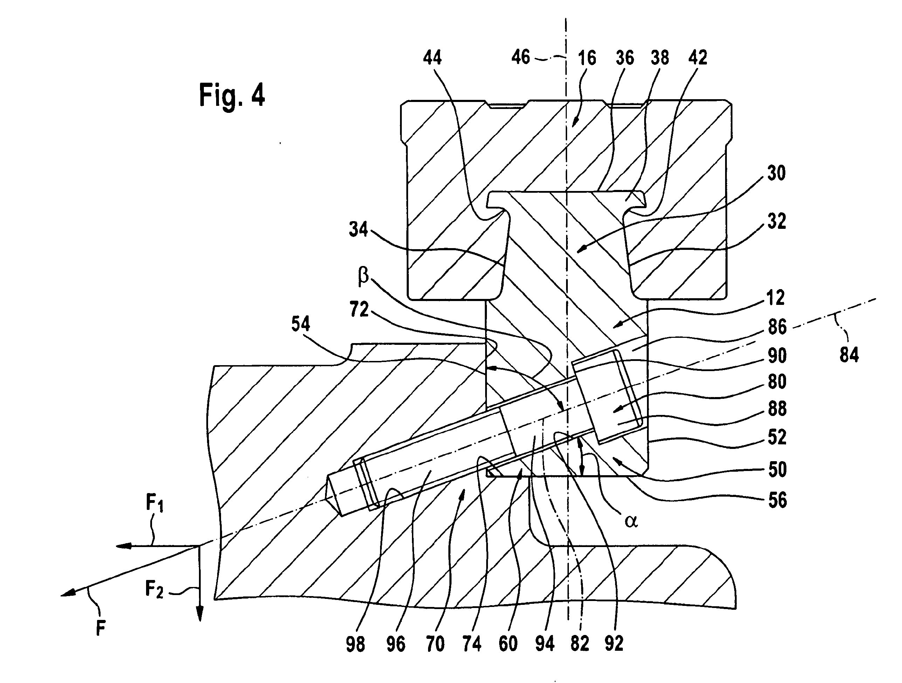

Der einstückig an den Führungsbereich 30 angeformte Fußbereich 50 ist mit zwei Seitenflächen 52 und 54 sowie einer Querfläche 56 versehen, wobei - wie in Fig. 4 dargestellt - der Fußbereich 50 mit einem Teilbereich, beispielsweise einem mindestens einen Teil der Seitenfläche 54 und einen Teil der Querfläche 56 bildenden Teilbereich, ein Einsatzteil 60 bildet, das in eine von einem Teilbereich des Grundkörpers 10 gebildete Aufnahme 70 einsetzbar ist, die ihrerseits eine erste Ausrichtfläche 72 aufweist, an welcher die Seitenfläche 54 anlegbar ist, sowie eine zweite Ausrichtfläche 74, an welcher die Querfläche 56 zumindest mit einem Teil derselben anlegbar ist.

Die beiden Ausrichtflächen 72 und 74 der Aufnahme 70 des Grundkörpers 10 lassen sich als präzise bearbeitete Flächen herstellen, die einerseits die Ausrichtung der montierten Führungsschiene 12 relativ zum Grundkörper 10 und andererseits deren Geradheit mitdefinieren, wobei die Flächen im Falle von Stahlteilen als Werkstoff geschliffene Flächen sind und im Falle von Gussteilen feingefräste Flächen.

Vorzugsweise ist der Fußbereich 50 ebenfalls im Wesentlichen symmetrisch zur Längsmittelebene 46 ausgebildet, das heißt, dass die Seitenflächen 52 und 54 jeweils im Wesentlichen im selben Abstand von der Längsmittelebene 46 und insbesondere ungefähr parallel zu dieser verlaufen und außerdem die Querfläche 56 von der Längsmittelebene 46 im Wesentlichen mittig, insbesondere ungefähr senkrecht geschnitten wird.

Insbesondere sind zumindest die Seitenfläche 54 und die Querfläche 56 ebenfalls als geschliffene Fläche des Fußbereichs 50 ausgebildet und verlaufen ebenfalls exakt parallele zur Längsrichtung 14 der Führungsschiene 12, so dass insgesamt sowohl die Seitenfläche 54 und auch die Querfläche 56 eine hochpräzise Ausrichtung der Seitenführungsflächen 32 und 34 sowie der Querführungsfläche 36 aufgrund ihres ebenfalls parallelen Verlaufs zur Längsrichtung 14 ermöglichen.

Um den Einsatzkörper 60 in der Aufnahme 70 exakt zu fixieren sind in der Längsrichtung 14 der Führungsschiene 12 aufeinanderfolgend Schrauben 80 vorgesehen, die sich mit ihren Schraubenachsen 82 einerseits quer zur Längsrichtung 14 und andererseits in einer Ebene 84 erstrecken, die sowohl mit jeder der Ausrichtflächen 72 und 74 als auch der Seitenfläche 54 und der Querfläche 56 einen spitzen Winkel einschließt, so dass durch jede der Schrauben 80 eine Kraft F erzeugt wird, die sich in zwei Teilkräfte F₁ und F₂ zerlegen lässt wobei die Teilkraft F₁ senkrecht auf die Seitenfläche 54 und somit auch senkrecht auf die Ausrichtfläche 72 wirkt und die Kraft F₂ senkrecht auf die Querfläche 56 und die Ausrichtfläche 74 wirkt, so dass die Seitenfläche 54 und die Ausrichtfläche 72 eine Flächenpaarung bilden, deren Flächen durch die Kraft F₁ beaufschlagt aneinander anliegend gehalten werden, und auch die Querfläche 56 mit der Ausrichtfläche 74 eine Flächenpaarung bilden, deren Flächen durch die Kraft F₂ beaufschlagt aneinander anliegend gehalten sind.

Durch die Kräfte F₁ und F₂ besteht somit die Möglichkeit, über die gesamte Länge der Führungsschiene 12 diese mit der Seitenfläche 54 im Wesentlichen vollflächig an der Ausrichtfläche 72 und mit der Querfläche 56 im Wesentlichen vollflächig an der Ausrichtfläche 74 anzulegen und dadurch nicht nur die Ausrichtung der Längsrichtung 14 der Führungsschiene 12 exakt vorzugeben, sondern auch noch deren Geradheit.

Um weder die Seitenführungsflächen 32 und 34 noch die Querführungsfläche 36 durch das Vorsehen der Schrauben 80 zu beeinträchtigen, hat der Fußbereich 50 zwischen der Querfläche 56 und dem Führungsbereich 30 eine derartige Ausdehnung, dass eine von der Seitenfläche 52 ausgehende und gegenüber dieser geneigt verlaufende Bohrung 86 zur Aufnahme eines Kopfes 88 der Schrauben 80 vollständig im Fußbereich 50 liegt, wobei sich endseitig der jeweiligen Bohrung 86 eine Schulter 90 bildet, auf welche der jeweilige Kopf 88 einwirkt.

Ferner durchsetzt ausgehend von der Schulter 90 eine gegenüber der Bohrung 86 im Durchmesser reduzierte Führungsbohrung 92 den Fußbereich 50 bis zum Erreichen der Seitenfläche 54.

In dieser Führungsbohrung 92 liegt die jeweilige Schraube 80 mit ihrem Schraubenschaft 94, während ein Gewindeabschnitt 96 der jeweiligen Schraube 80 in eine Gewindebohrung 98 im Grundkörper 10 eingeschraubt ist, wobei bei in die Aufnahme 70 eingesetztem Einsatzkörper 60 die Führungsbohrung 92 und die Gewindebohrung 98 fluchtend zueinander angeordnet sind.

Vorzugsweise hat die Bohrung 86 zur Aufnahme des jeweiligen Kopfes 88 der Schraube eine derartige Tiefe, das heißt, sie erstreckt sich ausgehend von der Seitenfläche 52 bis zur Schulter 90 so weit in den Fußbereich 50, dass die Köpfe 88 nicht über die Seitenfläche 52 überstehen und somit vollständig in dem Fußbereich 50 versenkt angeordnet werden können. Außerdem sind bei einer derartigen versenkten Anordnung der Schrauben 80 mit den Köpfen 88 die Köpfe 88 jederzeit zugänglich, da sie außerhalb eines Bewegungsbereichs des Führungswagens 16 liegen.

Durch Anziehen aller Schrauben 80 mit einem bestimmten Drehmoment lässt sich somit die Führungsschiene 12 über ihre gesamte Erstreckung in Längsrichtung 14 mit dem Einsatzkörper 60 mit im Wesentlichen konstanter Kraft in die Aufnahme 70 eindrücken und somit hinsichtlich des Verlaufs der Längsrichtung 14 exakt relativ zum Grundkörper 10 ausrichten und im Übrigen durch die an den Ausrichtflächen 72 und 74 anliegende Seitenfläche 54 und Querfläche 56 mit höchstmöglicher Präzision relativ zum Grundkörper 10 anordnen und ausrichten sowie geradegerichtet halten.

Insbesondere sind dabei bei einer Montage der Führungsschiene 12 am Grundkörper 10 keine zusätzlichen Einrichtungen zum Ausrichten oder Vorspannen der Führungsschiene 12 vor dem Fixieren erforderlich, da die Führungsschiene 12 unmittelbar durch die Schrauben 80 an den Grundkörper 10 angeschraubt werden kann und die Schrauben 80 - insbesondere beim Anziehen derselben mit demselben Drehmoment - die Kraft F erzeugen, die sich bei jeder der Schrauben 80 in die Kräfte F₁ und F₂ zerlegt, wobei dann auch bei jeder der Schrauben 80 die Kräfte F₁ und F₂ im Wesentlichen gleich groß sind und somit über die gesamte Länge der Führungsschiene 12 diese im Wesentlichen gleichmäßig relativ zum Grundkörper 10 verspannt ist.

Besonders vorteilhaft hat es sich dabei erwiesen, wenn die Ebene 84 in einem Winkel von α relativ zur Ausrichtfläche 74 und zur Querfläche 56 verläuft und in einem Winkel von β relativ zur Ausrichtfläche 72 und zur Seitenfläche 54 verläuft, um optimale Kraftverhältnisse zu erhalten.

Diese Ausrichtung der Schrauben 80 auch als Sollbruchelemente im Fall von Kollisionen in der Werkzeugmaschine einzusetzen, so dass die jeweilige Führungsschiene 12 von den Ausrichtflächen 72, 74 abheben und ausweichen kann.

Durch die erfindungsgemäße Lösung besteht somit die Möglichkeit, die Seitenführungsflächen 32 und 34 sowie die Querführungsfläche 36 als durchgehende unterbrechungsfrei ausgebildete Flächen auszubilden, da diese durch die Schrauben 80 zur Fixierung der Führungsschiene 12 am Grundkörper 10 überhaupt nicht tangiert sind, so dass - im Gegensatz zu den aus dem Stand der Technik bekannten Lösungen - keine Sorge dafür getragen werden muss, dass derartige Öffnungen wieder plan verschlossen werden, um ein Festsetzen von Spänen in diesen, die oftmals auch durch einen Späneabstreifer am Führungswagen 16 nicht vollständig entfernt werden können, zu verhindern. Außerdem sind bei dem beschriebenen Ausführungsbeispiel die Schrauben jederzeit unabhängig von den Führungswagen 16 zugänglich.

Vergleichbare Vorteile lassen sich in gleicher Weise erzielen, wenn die Schrauben 80 mit ihren Gewindeabschnitten 96 in den Gewindebohrungen 98 entsprechende Gewindebohrungen im Fußbereich 50 eingeschraubt sind und der Grundkörper 10 mit den Führungsbohrungen 92 entsprechenden Bohrungen zur Aufnahme der Schraubenschäfte 94 versehen ist. Dabei liegen die Schrauben 80 nach wie vor mit ihren Schraubenachsen 82 in der Ebene 84.

## Patentansprüche

1. Schlittensystem für Werkzeugmaschinen, umfassend einen Grundkörper (10), mindestens eine am Grundkörper (10) gehaltene Führungsschiene (12), die sich in einer Längsrichtung (14) erstreckt und die einen Führungsbereich (30) und einen Fußbereich (50) aufweist, und einen mit mindestens einem Führungswagen (16) an dem Führungsbereich (30) der Führungsschiene (12) geführten Schlitten, eine am Grundkörper (10) angeordnete und sich in der Längsrichtung (14) der Führungsschiene (12) erstreckende Aufnahme (70), welche zwei parallel zur Längsrichtung (14) der Führungsschiene (12) und quer zueinander verlaufende Ausrichtflächen (72, 74) aufweist, und einen von dem Fußbereich (50) gebildeten und in die Aufnahme (70) einsetzbaren Einsatzkörper (60), welcher mit jeweils einer zugeordneten Fläche (54, 56) an den Ausrichtflächen (72, 74) anliegt, wobei zur Verbindung zwischen dem Fußbereich (50) und dem Grundkörper (10) in der Längsrichtung (14) der Führungsschiene (12) aufeinanderfolgend angeordnete und den Grundkörper (10) sowie den Fußbereich (50) durchsetzende Schrauben (80) den Einsatzkörper (60) und die Aufnahme (70) gegeneinander verspannen,
**dadurch gekennzeichnet, dass** die Schrauben (80) den Fußbereich (50) außerhalb des Führungsbereichs (30) durchsetzen, dass die Schraubenköpfe (88) der Schrauben (80) den Fußbereich (50) beaufschlagen, und von einer der Aufnahme (70) gegenüberliegenden Seite auf den Einsatzkörper (60) einwirken, dass die Schraubenköpfe (88) außerhalb eines Bewegungsraumes des Führungswagens (16) angeordnet sind, und dass die Schrauben (80) mit ihren Schraubenachsen (82) quer zur Längsrichtung (14) und in einem spitzen Winkel (α, β) zu jeder der Ausrichtflächen (72, 74) ausgerichtet sind.

2. Schlittensystem nach Anspruch 1, **dadurch gekennzeichnet, dass** jede Ausrichtfläche (72, 74) und die zugeordnete Fläche (54, 56) des Einsatzkörpers (60) eine Flächenpaarung (72, 54; 74, 56) bilden und dass mindestens eine Fläche jeder Flächenpaarung (72, 54; 74, 56) als ebene Fläche ausgebildet ist.

3. Schlittensystem nach Anspruch 2, **dadurch gekennzeichnet, dass** beide Flächen einer Flächenpaarung (72, 54; 74, 56) als ebene Flächen ausgebildet sind.

4. Schlittensystem nach einem der Ansprüche 2 und 3, **dadurch gekennzeichnet, dass** die Ausrichtflächen (72, 74) in einem Winkel (α) in der Größenordnung von 90° zueinander verlaufen.

5. Schlittensystem nach einem der Ansprüche 2 bis 4, **dadurch gekennzeichnet, dass** die Flächenpaarungen (72, 54; 74, 56) jeweils durch mit hoher maßlicher und geometrischer Qualität feinbearbeitete Flächen gebildet sind.

6. Schlittensystem nach einem der voranstehenden Ansprüche, **dadurch gekennzeichnet, dass** der Führungsbereich (30) symmetrisch zur Längsmittelebene (46) der Führungsschiene (12) ausgebildet ist.

7. Schlittensystem nach einem der voranstehenden Ansprüche, **dadurch gekennzeichnet, dass** der Fußbereich (50) symmetrisch zu einer Längsmittelebene (46) der Führungsschiene (12) ausgebildet ist.

8. Schlittensystem nach einem der voranstehenden Ansprüche, **dadurch gekennzeichnet, dass** der Fußbereich (50) und der Führungsbereich (30) der Führungsschiene (12) Teil einer einstückigen, sich in der Längsrichtung (14) erstreckenden Profilschiene sind.

9. Schlittensystem nach Anspruch 8, **dadurch gekennzeichnet, dass** die Profilschiene in der Längsrichtung (14) eine im Wesentlichen konstante Querschnittsform aufweist.

10. Schlittensystem nach einem der voranstehenden Ansprüche, **dadurch gekennzeichnet, dass** alle Schrauben ständig im Wesentlichen mit gleich großen Vorspannkräften (F) auf den Einsatzkörper (60) und die Aufnahme (70) einwirken.

11. Schlittensystem nach einem der voranstehenden Ansprüche, **dadurch gekennzeichnet, dass** eine erste der an den Ausrichtflächen (72, 74) anlegbaren Flächen (54, 56) auf einer dem Führungsbereich (30) gegenüberliegenden Seite des Fußbereichs (50) verläuft.

12. Schlittensystem nach Anspruch 11, **dadurch gekennzeichnet, dass** eine zweite der an den Ausrichtflächen (72, 74) anlegbaren Flächen (54, 56) an dem Fußbereich (50) so angeordnet ist, dass sie seitlich der dem Führungsbereich (30) gegenüberliegenden Fläche (42) verläuft.

13. Schlittensystem nach einem der voranstehenden Ansprüche, **dadurch gekennzeichnet, dass** die Schraubenachsen (82) quer zur Längsmittelebene (46) der Führungsschiene (12) verlaufen.

14. Schlittensystem nach einem der voranstehenden Ansprüche, **dadurch gekennzeichnet, dass** die Schraubenachsen (82) der Schrauben (80) in einer Ebene (84) liegen.

15. Schlittensystem nach einem der voranstehenden Ansprüche, **dadurch gekennzeichnet, dass** die Schraubenköpfe (88) in dem Fußbereich (50) im Wesentlichen versenkt angeordnet sind.

## Claims

1. Slide system for machine tools, comprising a base member (10), at least one guide rail (12) held on the base member (10), said guide rail extending in a longitudinal direction (14) and having a guiding area (30) and a base area (50), and a slide guided on the guiding area (30) of the guide rail (12) with at least one guide carriage (16), a recess (70) arranged in the base member (10) and extending in the longitudinal direction (14) of the guide rail (12), said recess having two alignment surfaces (72, 74) extending parallel to the longitudinal direction (14) of the guide rail (12) and transversely to one another, and an insert member (60) formed by the base area (50) and insertable into the recess (70), said insert member abutting on the alignment surfaces (72, 74) with a respectively associated surface (54, 56), wherein for the connection between the base area (50) and the base member (10) screws (80) tension the insert member (60) and the recess (70) against one another, said screws being arranged so as to follow one another in the longitudinal direction (14) of the guide rail (12) and penetrating the base member (10) as well as the base area (50),
**characterized in that** the screws (80) penetrate the base area (50) outside the guiding area (30), that the screw heads (88) of the screws (80) act upon the base area (50) and act on the insert member (60) from a side located opposite the recess (70), that the screw heads (88) are arranged outside an area of movement of the guide carriage (16) and that the screws (80) are aligned with their screw axes (82) obliquely to the longitudinal direction (14) and at an acute angle (α ,β) in relation to each of the alignment surfaces (72, 74).

2. Slide system as defined in claim 1, **characterized in that** each alignment surface (72, 74) and the associated surface (54, 56) of the insert member (60) form a surface pairing (72, 54; 74, 56) and that at least one surface of each surface pairing (72, 54; 74, 56) is designed as a flat surface.

3. Slide system as defined in claim 2, **characterized in that** both surfaces of a surface pairing (72, 54; 74, 56) are designed as flat surfaces.

4. Slide system as defined in one of claims 2 and 3, **characterized in that** the alignment surfaces (72, 74) extend relative to one another at an angle (α) in the order of magnitude of 90°.

5. Slide system as defined in any one of claims 2 to 4, **characterized in that** the surface pairings (72, 54; 74, 56) are each formed by surfaces finely machined with a high dimensional and geometric quality.

6. Slide system as defined in any one of the preceding claims, **characterized in that** the guiding area (30) is designed to be symmetrical to the longitudinal central plane (46) of the guide rail (12).

7. Slide system as defined in any one of the preceding claims, **characterized in that** the base area (50) is designed to be symmetrical to a longitudinal central plane (46) of the guide rail (12).

8. Slide system as defined in any one of the preceding claims, **characterized in that** the base area (50) and the guiding area (30) of the guide rail (12) are part of a one-piece profiled rail extending in the longitudinal direction (14).

9. Slide system as defined in claim 8, **characterized in that** the profiled rail has an essentially constant cross-sectional shape in the longitudinal direction (14).

10. Slide system as defined in any one of the preceding claims, **characterized in that** all the screws act constantly on the insert member (60) and the recess (70) essentially with the same large tensioning forces (F).

11. Slide system as defined in any one of the preceding claims, **characterized in that** a first one of the surfaces (54, 56) adapted to abut on the alignment surfaces (72, 74) extends on a side of the base area (50) located opposite the guiding area (30).

12. Slide system as defined in claim 11, **characterized in that** a second one of the surfaces (54, 56) adapted to abut on the alignment surfaces (72, 74) is arranged on the base area (50) such that it extends to the side of the surface (42) located opposite the guiding area (30).

13. Slide system as defined in any one of the preceding claims, **characterized in that** the screw axes (82) extend obliquely to the longitudinal central plane (46) of the guide rail (12).

14. Slide system as defined in any one of the preceding claims, **characterized in that** the screw axes (82) of the screws (80) are located in a plane (84).

15. Slide system as defined in any one of the preceding claims, **characterized in that** the screw heads (88) are arranged in the base area (50) so as to be essentially countersunk.

## Revendications

1. Système de chariot pour machine-outil comprenant une embase (10), au moins un rail de guidage (12) maintenu sur l'embase (10), qui se prolonge dans une direction longitudinale (14) et qui présente une zone de guidage (30) et une zone de socle (50), et un chariot piloté par le rail de guidage (12) dans la zone de guidage (30) avec au moins une navette de guidage (16), un logement (70), agencé sur l'embase (10) et s'étirant dans la direction longitudinale (14) du rail de guidage (12), ce logement présente deux surfaces d'alignement (72, 74) parallèles à la direction longitudinale (14) du rail de guidage (12) et qui sont perpendiculaires l'une à l'autre, et un insert (60) formé dans la zone de socle (50) et qui peut se placer dans le logement (70), cet insert étant adjacent aux surfaces d'alignement (72, 74) par respectivement deux surfaces (54, 56) adjacentes, où, pour assurer la liaison entre la zone de socle (50) et l'embase (10), des vis (80) agencées les unes à la suite des autres dans la direction longitudinale (14) du rail de guidage (12) et traversant l'embase (10) et la zone du socle (50), assurent une tension sur l'insert (60) ainsi que sur le logement (70) pour les rapprocher,
**caractérisé en ce que** les vis (80) traversent la zone de socle (50) à l'extérieur de la zone de guidage (30), que les têtes (88) des vis (80) reposent sur la zone de socle (50) et s'exercent sur l'insert (60) à partir d'un côté opposé au logement (70), que les têtes de vis (88) sont agencées en dehors du domaine de mobilité de la navette de guidage (16) et que les vis (80) sont agencées avec leurs axes (82) perpendiculaires à la direction longitudinale (14) et avec un angle aigu (α, β) par rapport à chaque surface d'alignement (72, 74).

2. Système de chariot selon la revendication 1, **caractérisé en ce que** chaque surface d'alignement (72, 74) et la surface adjacente (54, 56) de l'insert (60) forment un appairage de surfaces (72, 54 ; 74, 56) et qu'au moins l'une des surfaces de chaque appairage (72, 54 ; 74, 56) est sous la forme d'une surface plane.

3. Système de chariot selon la revendication 2, **caractérisé en ce que** les deux surfaces d'un appairage de surfaces (72, 54 ; 74, 56) sont sous forme de surfaces planes.

4. Système de chariot selon l'une des revendications 2 ou 3, **caractérisé en ce que** les surfaces d'alignement (72, 74) sont orientées l'une par rapport à l'autre avec un angle (α) de l'ordre de grandeur de 90 °.

5. Système de chariot selon l'une des revendications de 2 à 4, **caractérisé en ce que** les appairages de surfaces (72, 54 ; 74, 56) sont respectivement formés par des surfaces d'une qualité dimensionnelle et géométrique élevée.

6. Système de chariot selon l'une des revendications précédentes, **caractérisé en ce que** la zone de guidage (30) est formée de façon symétrique par rapport au plan médian longitudinal (46) du rail de guidage (12).

7. Système de chariot selon l'une des revendications précédentes, **caractérisé en ce que** la zone de socle (50) est formée de manière symétrique par rapport à un plan médian longitudinal (46) du rail de guidage (12).

8. Système de chariot selon l'une des revendications précédentes, **caractérisé en ce que** la zone de socle (50) et la zone de guidage (30) du rail de guidage (12) font partie d'un rail de profil constituée en une pièce s'étirant dans la direction longitudinale (14).

9. Système de chariot selon la revendication 8, **caractérisé en ce que** le rail de profil présente une section de forme pratiquement constante dans la direction longitudinale (14).

10. Système de chariot selon l'une des revendications précédentes, **caractérisé en ce que** toutes les vis exercent constamment sur l'insert (60) et le logement (70) des forces de précontrainte (F) pratiquement égales.

11. Système de chariot selon l'une des revendications précédentes, **caractérisé en ce qu'**une première des surfaces adjacentes (54,56) aux surfaces d'alignement (72, 74) se situe sur l'un des côtés de la zone de guidage (30), opposé à la zone de socle (50).

12. Système de chariot selon la revendication 11, **caractérisé en ce qu'**une seconde des surfaces adjacentes (54, 56) aux surfaces d'alignement (72, 74) est agencée sur la zone de socle (50) de telle manière qu'elle se situe à côté de la surface opposée (42) à la zone de guidage (30).

13. Système de chariot selon l'une des revendications précédentes, **caractérisé en ce que** les axes des vis (82) sont situés perpendiculairement au plan médian longitudinal (46) du rail de guidage (12).

14. Système de chariot selon l'une des revendications précédentes, **caractérisé en ce que** les axes (82) des vis (80) se situent dans un plan (84).

15. Système de chariot selon l'une des revendications précédentes, **caractérisé en ce que** les têtes de vis (88) sont dans l'ensemble alignées à l'intérieur de la zone de socle (50).
